Europäisches Patentamt

European Patent Office

Office européen des brevets

(11) Publication number: **0 314 416**
**A2**

# (12) EUROPEAN PATENT APPLICATION

(21) Application number: 88309978.0

(22) Date of filing: 24.10.88

(51) Int. Cl.⁴: **C08L 23/22 , C08L 23/28 , C08K 3/04 , //(C08L23/22, 23:28,C08K3:04),(C08L23/28, 23:22,C08K3:04)**

(30) Priority: 28.10.87 US 113507

(43) Date of publication of application:
03.05.89 Bulletin 89/18

(84) Designated Contracting States:
BE DE FR GB IT NL

(71) Applicant: **POLYSAR LIMITED**

**Sarnia Ontario N7T 7M2(CA)**

(72) Inventor: **Mohammed, Sheikh Azizual Hassan**
**1431 Errol Road East**
**Sarnia Ontario, N7S 5S6(CA)**
Inventor: **von Hellens, Carl Walter**
**1953 Winslow Crescent**
**Bright's Grove Ontario, N0N 1C0(CA)**

(74) Representative: **Perry, Robert Edward et al**
**GILL JENNINGS & EVERY 53-64 Chancery Lane**
**London WC2A 1HN(GB)**

(54) **Improved butyl rubber compositions.**

(57) A new rubber composition, the vulcanizate of which has reduced permeability to gases, comprises: from about 70 to about 90 parts by weight of a high molecular weight butyl-type rubbery polymer; from about 10 to about 30 parts by weight of a low molecular weight butyl-type rubber polymer, wherein the total amount of polymers described above is one hundred parts by weight; from about 30 to about 90 parts by weight of at least one carbon black; and a curing system.

EP 0 314 416 A2

# IMPROVED BUTYL RUBBER COMPOSITIONS

## Field of the Invention

This invention relates to polymer compositions and vulcanizates thereof. More particularly, it relates to compositions comprising vulcanizable blends of rubbery polymers useful for the manufacture of articles requiring low or reduced permeability to gases, in general, and for pneumatic tire inner liners, in particular.

## Background of the Invention

Butyl polymers have been known and commercially available for many years. They possess a variety of inherently satisfactory properties as elastomers which has enabled them to find utility in many commercial areas. Among their satisfactory inherent properties are their low permeability to air, high damping of low frequency vibrations, and good resistance to aging, heat, acids, bases, ozone and other chemicals after vulcanization, which renders them well suited for use in a variety of applications including articles requiring low or reduced permeability to air. Examples of such articles include, but are not limited to, tire inner tubes, tire curing bladders and various air bladders.

Halogenated butyl polymers have also been known and commercially available for many years. In addition to possessing the satisfactory inherent properties of butyl polymers described above, halogenated butyl polymers also possess cure compatibility with more highly unsaturated rubbers and good adhesion to such other rubbers after vulcanization, which renders them well suited for use in pneumatic tire inner liners. In the tire industry's continuing quest for improved inner liners, a rubber composition which, after vulcanization, inherently possesses reduced permeability to air when compared to a vulcanizate in which the polymer content is 100 percent halogenated butyl polymer, would be desirable, provided that this improvement also resulted in the maintenance of an acceptable level of processing, strength and adhesive properties.

## Description of the Prior Art

The use of plasticizers in rubber compositions is well known in the art. Such plasticizers serve to facilitate calendering and extrusion. Specifically, extensive use of petroleum oils has been made in the compounding of butyl-type rubbers. These oils, when used in amounts of up to about 40 parts by weight per 100 parts by weight of butyl-type rubber also improve the low temperature elastic properties of butyl type rubbers and protect against embrittlement at very low temperatures (less than -60°C). A more thorough discussion on the use of plasticizers in rubber compositions may be found in "Synthetic Rubber" by G.S. Whitby (J. Wiley & Sons, Inc.), pages 383-384, 413-417 and 853-854.

U.S. Patent 2,721,185 teaches the use of vulcanized liquid conjugated diolefin polymers as softeners, plasticizers and/or tackifiers in natural and synthetic rubbers. Specifically, a liquid conjugated diolefin polymer having a molecular weight of from about 500 to about 5000 is sulphur vulcanized to produce the improved rubber plasticizer.

U.S. Patent 2,738,100 teaches that sulphur vulcanizable synthetic rubbers may be plasticized with a novel liquid polydiene derivative. Specifically the novel plasticizer may be selected from a hydroxylated liquid polydiene, a phosphorus-containing ester of a hydroxylated liquid polydiene and a carboxylic acid ester of a hydroxylated polydiene.

U.S. Patent 3,240,844 teaches a vulcanizable elastomer composition which comprises a diene polymer containing vinyl unsaturation, a free radical generating agent and a polythiol, wherein the polythiol is a mercapto-terminated liquid polymer. The addition of the polythiol results in an improvement in cure which is described as being apparently synergistic.

U.S. Patent 3,242,129 teaches the use of carboxy-terminated liquid polybutadiene as a processing aid for a cis-polybutadiene or a polybutadiene prepared with a lithium based catalyst. The carboxy-terminated liquid polybutadiene has a molecular weight of from 1000 to 20,000 and is used in the amount of from 0.5 to 10 parts per hundred parts of cis-polybutadiene or polybutadiene prepared with a lithium catalyst.

## Summary of the Invention

It is an object of the present invention to provide novel rubber compositions for use in articles requiring low or reduced permeability to gases.

It is further an object of the present invention to provide vulcanizates which have reduced permeability to gases and are derived from such novel rubber compositions.

Accordingly, in one aspect, our invention provides a new rubber composition, the vulcanizate of which has reduced permeability to gases, comprising

from about 70 to about 90 parts by weight of a high molecular weight rubbery polymer selected from the group consisting of butyl rubber, chlorinated butyl rubber, brominated butyl rubber and mixtures thereof,

from about 10 to about 30 parts by weight of a low molecular weight polymer selected from the group consisting of low molecular weight brominated butyl rubber, low molecular weight chlorinated butyl rubber, low molecular weight butyl rubber and mixtures thereof,

wherein the total amount of polymers described above is one hundred parts by weight,

from about 30 to about 90 parts by weight of at least one carbon black, and

a curing system.

In another aspect, our invention provides a vulcanizate which has reduced permeability to gases and is derived from a rubber composition comprising:

from about 70 to about 90 parts by weight of a high molecular weight rubbery polymer selected from the group consisting of butyl rubber, chlorinated butyl rubber, brominated butyl rubber and mixtures thereof,

from about 10 to about 30 parts by weight of a low molecular weight polymer selected from the group consisting of low molecular weight brominated butyl rubber, low molecular weight chlorinated butyl rubber, low molecular weight butyl rubber and mixtures thereof,

wherein, the total amount of polymers described above is one hundred parts by weight,

from about 30 to about 90 parts by weight of at least one carbon black, and

a curing system.

Thus an aspect of the present invention lies in using a low molecular weight polymer to replace the hydrocarbon extender oil conventionally used. The replacement is achieved by using from about 1 to about 3 parts by weight of low molecular weight polymer for each 1 part by weight of hydrocarbon extender oil which would conventionally be used. As used herein, the term "low molecular weight polymer" means a polymer having a number average molecular weight (Mn) of from about 15,000 to about 30,000, as measured by gel permeation chromatography.

Vulcanizates derived from the rubber compositions described above exhibit, both surprisingly and unexpectedly, a marked reduction in air permeability when compared to vulcanizates derived from compositions containing conventional hydrocarbon extender oil and no low molecular weight polymer.

## Detailed Description of the Invention

The essence of this invention lies in providing novel rubber compositions, and vulcanizates thereof which have low or reduced air permeability characteristics while maintaining an acceptable level of other physical properties. Specifically, the present invention is directed to improved rubber compositions and vulcanizates thereof, said improvement comprising the replacement of conventional hydrocarbon extender oil with a low molecular weight polymer.

The high molecular weight rubbery polymer suitable for use in this invention is one of butyl rubber, brominated butyl rubber and chlorinated butyl rubber, and is used in an amount of from about 70 to about 90, preferably from about 75 to about 85, parts by weight, based on a total of 100 parts by weight of polymers. Butyl rubber is well known in the art and is a copolymer of a $C_4$-$C_6$ isoolefin, preferably isobutylene, and a $C_4$-$C_6$ conjugated diolefin, preferably isoprene. A preferred butyl polymer contains from about 97 to about 99.5 weight percent of isobutylene and from about 0.5 to about 3 weight percent of isoprene. Butyl polymer is a solid polymer typically having a molecular weight, expressed as the Mooney (ML 1+8 at 125° C), of from about 25 to about 65, preferably from about 40 to about 60.

Brominated butyl rubber is produced by bromination of butyl rubber and typically contains from about 1

3

to about 3, preferably from about 1 to about 2, weight percent of isoprene and from about 97 to about 99, preferably from about 98 to about 99, weight percent of isobutylene, based on the hydrocarbon content of the polymer, and from about 1 to about 4, preferably from about 1.5 to about 3, weight percent of bromine, based on the bromobutyl polymer. A typical bromobutyl polymer has a molecular weight, expressed as the Mooney viscosity (ML 1 + 8 at 125° C), of from about 25 to about 55.

Chlorinated butyl rubber is produced by chlorination of butyl rubber and typically contains from about 1 to about 3, preferably from about 1 to about 2, weight percent of isoprene, and from about 97 to about 99, preferably from about 98 to about 99, weight percent of isobutylene, based on the hydrocarbon content of the polymer, and from about 0.5 to about 2.5, preferably from about 0.75 to about 1.75, weight percent of chlorine, based on the chlorobutyl polymer. A typical chlorobutyl polymer has a molecular weight, expressed as the Mooney (ML 1 + 8 at 125° C), of from about 35 to about 55.

The Mooney viscosities described in the above three paragraphs correspond to a number average molecular weight range of approximately 100,000 to 200,000.

The low molecular weight polymer suitable for use in this invention is one of low molecular weight brominated butyl rubber, low molecular weight chlorinated butyl rubber and low molecular weight butyl rubber; and is used in an amount of from about 10 to about 30, preferably from about 15 to about 25, parts by weight, based on a total of 100 parts by weight of polymers. The molecular weight of the polymer is particularly important. Accordingly, a low molecular weight polymer suitable for use in this invention has a number average molecular weight (Mn) of from about 15,000 to about 30,000, preferably from about 15,000 to about 25,000. If the Mn of the low molecular polymer is less than about 15,000 or greater than about 30,000 optimum plasticization of the compound will not be achieved. The Mn of the polymer can be readily determined by gel permeation chromatography using standard techniques.

The process of making the low molecular weight polymer suitable for use in this invention is not particularly limited. In one embodiment, a low molecular weight polymer suitable for use in the composition of the present invention is produced by reacting a high molecular weight polymer with a gaseous stream containing ozone at a temperature of from about 100° to about 180° C in a reaction vessel that subjects the polymer to severe mastication (an example of such a vessel would be an extruder). Such a process is suitable for producing low molecular weight brominated butyl rubber, low molecular weight chlorinated butyl rubber and low molecular weight butyl rubber, and is fully disclosed in Canadian Patent 1,221,497.

In another embodiment, a low molecular weight polymer suitable for use in the composition of the present invention is produced by reacting a high molecular weight polymer with an air stream in an extruder, which is maintained at a temperature of from about 150° to about 250° C, wherein the high molecular weight polymer does not contain an antioxidant compound. Such a process is suitable for producing low molecular weight butyl rubber and is fully disclosed in U.S. Patent 4,614,772.

In yet another embodiment, low molecular weight butyl rubber suitable for use in the composition of the present invention is produced by copolymerization of isobutylene and isoprene in a methyl chloride solution at a temperature of from about -95° to about -50° C and in the presence of a catalyst system comprising a Lewis acid, preferably aluminum trichloride. The polymerization is continued until a suitable conversion level is reached which results in a polymer having Mn in the range of from about 15,000 to about 30,000.

It is well known in the art that the use of hydrocarbon extender oils as a compounding ingredient serves to improve the processability of the rubber in the compounding process. Also well known is the fact that the use of such oil increases the air permeability of a vulcanizate derived from such a rubber composition. We have now found that a low molecular weight polymer may be used to replace the hydrocarbon extender oil. The replacement is achieved by using from about 1 to about 3 parts by weight of low molecular weight polymer for each 1 part by weight of hydrocarbon extender oil which would conventionally be used. Such a replacement leads to three surprising and unexpected results. First, there is a reduction in the air permeability of the vulcanizate derived from such a rubber composition. Second, the low molecular weight polymer incorporates itself into the rubber composition more readily than hydrocarbon extender oil. Third, the plasticizing effect of the low molecular weight polymer is equivalent to that of hydrocarbon extender oil and thus, the processability of the rubber compositions is at least the same as in the case where hydrocarbon extender oil is used. The use of carbon blacks for reinforcement of vulcanizates is well known in the art and results in improved strength properties of the final vulcanizates. Suitable carbon blacks for practicing this invention include the well known furnace and channel, preferably furnace black, and are used in amounts of from about 30 to about 90, preferably from about 50 to about 70, parts by weight.

The curing system suitable for use in the present invention is not particularly restricted. A typical curing system, suitable for use when the high molecular weight polymer is butyl rubber, comprises: (i) from about 1 to about 10, preferably from about 2 to about 5, parts by weight of zinc oxide, (ii) from about 0.5 to about 3 parts by weight of at least one sulphur based accelerator and (iii) from about 0.2 to about 2 parts by weight of elemental sulphur. Another typical curing system, suitable for use when the high molecular weight polymer is halogenated butyl rubber, comprises: (i) from about 1 to about 10, preferably from about 2 to about 5, parts by weight of zinc oxide, (ii) from about 0.5 to about 3 parts by weight of at least one sulphur based accelerator and, optionally, (iii) from about 0.2 to about 2 parts by weight of elemental sulphur. Sulphur based accelerators suitable for use in either curing system described above may be selected from the thiuram sulphides such as tetramethyl thiuram disulphide (TMTD), the thiocarbamates such as zinc dimethyl dithiocarbamate (ZDC) and the thiazyl and benzothiazyl compounds such as mercaptobenzothiazyl disulphide (MBTS). Preferably, the sulphur based accelerator is mercaptobenzothiazyl disulphide.

Stabilizers, antioxidants and tackifiers may also be added in the usual way and in the normal amounts for compounding butyl-type rubbery polymers.

The compositions according to the present invention can be prepared by the well known methods for compounding of rubbery polymers including mixing on a rubber mill or in internal mixers such as a Banbury mixer. In the compounding procedure, the conventional compounding ingredients are incorporated. Generally, it is preferred to add the cure active agents in a second stage of compounding which may be on a rubber mill or in an internal mixer operated at a temperature normally not in excess of about 110°C. The compounds are cured in a conventional manner by heating for from about 5 to about 120 minutes at temperatures of from about 150° to about 200°C to form novel elastomeric vulcanizates having useful properties as described herein.

When rubber compositions according to this invention are vulcanized as described above, the resulting vulcanizates exhibit, both surprisingly and without scientific explanation, a reduction in air permeability while maintaining a desirable balance of other physical properties rendering said vulcanizates suitable for use in articles requiring low or reduced permeability to air. By a reduction in air permeability is meant a reduction in the volume of air that passes through a unit area of defined thickness of the vulcanizate per unit of time. By physical properties is meant hardness, elongation, fatigue life, adhesion and strength properties, which include modulus at 100 percent elongation, modulus at 300 percent elgonation and tensile strength at rupture. Accordingly, said vulcanizates are suitable for use in articles requiring low or reduced permeability to gases while maintaining a desirable balance of other physical properties. Examples of such articles include, but are not limited to, pneumatic tire inner liners and a rubbery membrane material suitable for use in the production of air bladders and the like.

In preferred embodiments of the present invention, a rubber composition comprises, for a total of one hundred parts by weight of polymers, from about 70 to about 90, more preferably from about 75 to about 85, parts by weight of a high molecular weight polymer selected from the group consisting of chlorinated butyl rubber, brominated butyl rubber and mixtures thereof, more preferably brominated butyl rubber; from about 10 to about 30, more preferably from about 15 to about 25, parts by weight of a low molecular weight polymer selected from the group consisting of low molecular weight chlorinated butyl rubber, low molecular weight brominated butyl rubber and mixtures thereof; from about 30 to about 90 parts by weight of at least one carbon black; and a curing system.

A vulcanizate derived from the preferred embodiments described above is suitable for use in the production of a rubber membrane material. Such a membrane material would have many uses. These may include, but are not limited to, pneumatic tire inner liners, aerosol spray can linings and air bladders used in soccer balls, footballs, basketballs, volleyballs, air mattresses and the like.

The following examples illustrate the present invention and are not intended to limit the scope thereof. All parts are parts by weight unless otherwise specified. The materials used were:

Butyl rubber (IIR) - commercial product sold as POLYSAR Butyl 301, having an unsaturation of about 1.6 mole percent and a Mooney viscosity (ML 1+8 at 125°C) of from about 47 to about 57.

Chlorinated butyl rubber (CIIR) - commercial product sold as POLYSAR Chlorobutyl 1255, having a chlorine content of about 1.3 weight percent and a Mooney viscosity (ML 1+8 at 125°C) of from about 44 to about 53.

Brominated butyl rubber (BIIR-1) - commercial product sold as POLYSAR Bromobutyl X2, having a bromine content of about 2.1 weight percent and a Mooney viscosity (ML 1+8 at 125°C) of from about 41 to about 51.

Brominated butyl rubber (BIIR-2) - commercial product sold as POLYSAR Bromobutyl 2030, having a bromine content of about 2.1 weight percent and a Mooney viscosity (ML 1+8 at 125°C) of from about 28 to about 36.

Low molecular weight chlorinated butyl rubber ($O_3$-CIIR) - experimental product obtained by reacting CIIR with a stream containing about 2 volume percent of ozone in air in a Leistritz Model LSM 30.34 Extruder at a temperature of about 150°C and a screw speed of about 350 rpm.

Low molecular weight brominated butyl rubber ($O_3$-BIIR) - experimental product obtained by reacting BIIR-1 with a stream containing about 2 volume percent of ozone in air in a Leistritz Model LSM 30.34 Extruder at a temperature of about 150°C and a screw speed of about 300 rpm.

Pentalyn "A" - tackifier - pentaerythritol ester of a wood rosin.

Carbon black - commercial product sold as N-660.

Paraffinic oil - commercial product sold as Sunpar 2280.

Low molecular weight polybutene - commercial products sold as Indopol H-100 and Indopol H-1900, having molecular weight, as measured by vapour phase osmometry, of 920 and 2300, respectively (obtained from manufacturers product literature).

Amberol ST-149 - curative - phenol-formaldehyde resin.

MBTS (mercaptobenzothiazyl disulphide: accelerator), sulphur (curative), stearic acid (activator and processing aid) and zinc oxide (vulcanization agent) were commercially available materials.

Example 1

Three bromobutyl rubber compositions were prepared according to the recipes shown in Table I. The bromobutyl polymer, low molecular weight polymer (as required), carbon black, hydrocarbon extender oil (as required), tackifier, stearic acid and accelerator (MBTS) were mixed in a Banbury internal mixer at an initial temperature of 30°C. After 4 minutes of mixing the compound was dumped. The curative system, comprising sulphur and zinc oxide, was added to the compound on a two roll rubber mill. During the mixing procedure, it was noted that the incorporation of low molecular weight polymer (Samples 2 and 3) into the composition was achieved to essentially the same extent as incorporation of hydrocarbon extender oil (Sample 1) into a similar composition. The rubber compositions were vulcanized for thirty minutes at 166°C. Sample 1 of Table I is a control formulation containing conventional hydrocarbon extender oil in place of the low molecular weight polymer and thus, is outside the scope of the present invention.

Tensile properties, including tensile stress (usually known as modulus) at 100 percent and 300 percent elongations, and at rupture ("tensile strength") were determined according to ASTM D412-80. Hardness was determined using a Type A Shore durometer according to ASTM D2240-81. Hot air aging was completed according to ASTM D573-81.

Static peel adhesion of the vulcanizates was tested using a modified version of the Pirelli Peel Test. In this procedure, a small slab of the rubber compound to be tested is placed in face to face contact with a similar slab of control rubber compound, with a small teflon strip interface. Fabric layers are placed on both remote surfaces, and the assembly is cured by heating for 30 minutes at 166°C. Then the force per unit-width required to pull the components apart at their mutual interface is measured at 100°C and reported, in kiloNewtons per meter. When the adhesion is high, the separation sometimes occurs by tearing within the body of the rubber slabs under test. This is referred to as "stock tear", and represents a maximum value for the adhesion. In the present case, the control rubber compound against which the test compounds were cured, was a natural rubber compound, representative of truck tire carcass compounds.

The vulcanizates were tested for aged and unaged fatigue life using the Monsanto "fatigue to failure" (FTF) test. In this test, dumbbell shaped pieces of cured rubber, of standard size, were gripped by their ends in the jaws of a test machine, and repeatedly stretched and relaxed. The number of stretching cycles to break off the samples was noted, and the geometric mean over twelve test samples was calculated and recorded as the result. In this case, the samples were repeatedly stretched to 140 percent extension by use of cam #24.

The vulcanizates were also tested for permeability to air. In this test a vulcanized rubber sheet was placed into a permeability test cell at which point a positive gas pressure of 0.34 MPa was applied to one side of the sheet. The test cell containing the specimen was preconditioned for 24 hours at room temperature to allow the system to establish an equilibrium prior to actual testing, after which the test cell was mounted in a constant temperature bath at 65°C. The gas permeating the specimen displaced a liquid from a graduated capillary tube, permitting a direct measurement of the volume. Accordingly, the reported value (Q) for air permeability represents the volume of air passing, per second, through a specimen of 1 $cm^2$ area and 1 cm thickness when the difference in pressure across the specimen is 1 atmosphere.

TABLE I

| | SAMPLE # | | |
|---|---|---|---|
| | 1 | 2 | 3 |
| BIIR-2 | 100 | 80 | 80 |
| $O_3$-BIIR | -- | 20 | -- |
| $O_3$-CIIR | -- | -- | 20 |
| Mn of Low Molecular Weight Polymer, x $10^{-3}$ | -- | 22 | 18 |
| Carbon Black | 60 | 60 | 60 |
| Paraffinic oil | 10 | -- | -- |
| Pentalyn "A" | 4 | 4 | 4 |
| Stearic acid | 1 | 1 | 1 |
| MBTS | 1.3 | 1.3 | 1.3 |
| Zinc oxide | 3 | 3 | 3 |
| Sulphur | 0.5 | 0.5 | 0.5 |

The test results are provided in Table II. Samples 2 and 3, in which the hydrocarbon extender oil has been replaced by a low molecular weight halogenated polymer, exhibit a reduction in air permeability when compared to the control (Sample 1) and thus, Samples 2 and 3 are within the scope of the present invention. Furthermore, Samples 2 and 3 exhibit an acceptable balance of the other physical properties rendering such vulcanizates suitable for use in a pneumatic tire inner liner application.

TABLE II

| | SAMPLE # | | |
|---|---|---|---|
| | 1 | 2 | 3 |
| Compound Mooney (ML 1 + 4 at 100° C) | 53 | 60 | 59 |
| VULCANIZATE PROPERTIES | | | |
| Hardness, Shore A | 56 | 63 | 65 |
| 100% Modulus, MPa | 1.1 | 1.3 | 1.2 |
| 300% Modulus, MPa | 3.5 | 3.4 | 3.2 |
| Tensile strength, MPa | 9.6 | 8.1 | 7.8 |
| Elongation at break, % | 775 | 805 | 840 |
| AGED PROPERTIES | | | |
| (168 hrs at 120° C) | | | |
| Hardness, Shore A | 65 | 73 | 66 |
| 100% Modulus, MPa | 2.2 | 2.6 | 2.5 |
| 300% Modulus, MPa | 2.6 | 6.4 | 6.0 |
| Tensile strength, MPa | 9.2 | 7.7 | 7.3 |
| Elongation, % | 565 | 520 | 510 |
| Static peel adhesion (to 100% natural rubber carcass) at 100° C, kN/m | 12.7 | 9.4 | 9.8 |
| Monsanto F.T.F. | | | |
| - unaged, kc | 234 | 234 | 224 |
| - aged (168 hrs at 120° C), kc | 53 | 54 | 59 |
| Permeability to air (pre-conditioned 24 hrs at room temp. and 0.34 MPa) at 65° C, Q x $10^8$ | 3.1 | 1.9 | 2.2 |

Example 2

7

Using the same compounding procedure described in Example 1, three chlorobutyl rubber compositions were prepared according to the recipes shown in Table III.

After vulcanization, the physical properties of the vulcanizates were measured as described in Example 1. Sample 4 of Table III is a control formulation containing conventional hydrocarbon extender oil in place of the low molecular weight polymer and thus, is outside the scope of the present invention.

The test results are provided in Table IV. Samples 5 and 6, in which the hydrocarbon extender oil has been replaced by a low molecular weight halogenated polymer, exhibit a reduction in air permeability when compared to the control (Sample 4) and thus, Samples 5 and 6 are within the scope of the present invention. Further, Samples 5 and 6 exhibit an acceptable level of the other physical properties rendering such vulcanizates suitable for use in articles requiring reduced or low permeability to air.

TABLE III

|  | SAMPLE # | | |
|---|---|---|---|
|  | 4 | 5 | 6 |
| CIIR | 100 | 80 | 80 |
| $O_3$-CIIR | -- | 20 | -- |
| $O_3$-BIIR | -- | -- | 20 |
| Mn of Low Molecular Weight Polymer, $\times 10^{-3}$ | -- | 18 | 22 |
| Carbon Black | 60 | 60 | 60 |
| Paraffinic oil | 12 | -- | -- |
| Pentalyn "A" | 4 | 4 | 4 |
| Stearic acid | 1 | 1 | 1 |
| MBTS | 1.3 | 1.3 | 1.3 |
| Zinc oxide | 3 | 3 | 3 |
| Sulphur | 0.5 | 0.5 | 0.5 |

TABLE IV

| | SAMPLE # | | |
|---|---|---|---|
| | 4 | 5 | 6 |
| Compound Mooney (ML 1 + 4 at 100° C) | 59 | 69 | 71 |
| VULCANIZATE PROPERTIES | | | |
| Hardness, Shore A | 51 | 52 | 60 |
| 100% Modulus, MPa | 1.2 | 1.4 | 1.4 |
| 300% Modulus, MPa | 4.4 | 4.6 | 4.8 |
| Tensile strength, MPa | 10.5 | 9.1 | 9.0 |
| Elongation at break, % | 750 | 740 | 670 |
| AGED PROPERTIES | | | |
| (168 hrs at 120° C) | | | |
| Hardness, Shore A | 58 | 66 | 67 |
| 100% Modulus, MPa | 2.1 | 2.5 | 2.8 |
| 300% Modulus, MPa | 7.1 | 7.5 | 8.1 |
| Tensile strength, MPa | 9.9 | 8.8 | 9.7 |
| Elongation, % | 480 | 370 | 430 |
| Static peel adhesion (to 100% natural rubber carcass) at 100° C, kN/m | 2.0 | 1.2 | 2.0 |
| Monsanto F.T.F. | | | |
| - unaged, kc | 341 | 297 | 272 |
| - aged (168 hrs at 120C), kc | 23 | 31 | 29 |
| Permeability to air (pre-conditioned 24 hrs at room temp. and 0.34 MPa) at 65° C, Q x $10^8$ | 3.4 | 2.4 | 2.2 |

Example 3

Three bromobutyl rubber compositions were prepared according to the recipes shown in Table V using a compounding procedure similar to the one described in Example 1, except that i) the compositions were mixed in a Banbury internal mixer at an initial temperature of 66° C and ii) the compounds were dumped after 5 minutes of mixing.

After vulcanization, the physical properties were measured as described in Example 1. Sample 7 of Table V is a control formulation containing conventional hydrocarbon extender oil. Samples 8 and 9 of Table V each contain a low molecular weight polybutene in place of conventional hydrocarbon extender oil. Accordingly, Samples 7, 8 and 9 are all outside the scope of the present invention.

The test results are provided in Table VI and indicate that the replacement of conventional hydrocarbon extender oil with low molecular weight polybutene does not impart a significant reduction in the air permeability of the vulcanizate. Therefore, this Example serves to illustrate the criticality in choosing the low molecular weight butyl polymers hereinbefore described to achieve the objective of the present invention.

9

TABLE V

| | SAMPLE # | | |
|---|---|---|---|
| | 7 | 8 | 9 |
| BIIR-1 | 100 | 100 | 100 |
| Indopol H-100 | - | 15 | - |
| Indopol H-1900 | - | - | 15 |
| Carbon Black | 63 | 63 | 63 |
| Paraffinic oil | 14 | - | - |
| Stearic acid | 1 | 1 | 1 |
| MBTS | 1.3 | 1.3 | 1.3 |
| Zinc oxide | 5 | 5 | 5 |
| Sulphur | 0.5 | 0.5 | 0.5 |
| Amberol ST-149 | 4 | - | - |

TABLE VI

| | SAMPLE # | | |
|---|---|---|---|
| | 7 | 8 | 9 |
| Compound Mooney (ML 1 + 4 at 100°C) | 53 | 62 | 62 |
| VULCANIZATE PROPERTIES | | | |
| Hardness, Shore A | 47 | 53 | 52 |
| 100% Modulus, MPa | 1.0 | 1.3 | 1.0 |
| 300% Modulus, MPa | 3.9 | 5.3 | 4.9 |
| Tensile strength, MPa | 10.2 | 9.5 | 10.0 |
| AGED PROPERTIES | | | |
| (168 hrs. at 121°C) | | | |
| Hardness, Shore A | 57 | 55 | 55 |
| 100% Modulus, MPa | 3.4 | 2.8 | 2.3 |
| 300% Modulus, MPa | 8.2 | 8.9 | 8.5 |
| Tensile strength, MPa | 8.9 | 10.0 | 10.0 |
| Permeability to air (pre-conditioned 24 hrs. at room temperature and 0.34 MPa) at 65°C, Q x $10^8$ | 4.9 | 4.3 | 4.6 |

## Claims

1. A new rubber composition, the vulcanizate of which has reduced permeability to gases characterized in that it comprises:

from about 70 to about 90 parts by weight of a high molecular weight rubbery polymer having a number average molecular weight of approximately 100,000 to 200,000 selected from the group consisting of butyl rubber, chlorinated butyl rubber, brominated butyl rubber and mixtures thereof,

from about 10 to about 30 parts by weight of a low molecular weight polymer having a number average molecular weight of about 15,000 to about 30,000 selected from the group consisting of low molecular weight brominated butyl rubber, low molecular weight chlorinated butyl rubber, low molecular weight butyl rubber and mixtures thereof,

wherein, the total amount of polymers described above is one hundred parts by weight, from about 30 to about 90 parts by weight of at least one carbon black, and a curing system.

2. The composition of Claim 1, characterized in that said low molecular weight polymer is produced by reacting a high molecular weight polymer with a gaseous stream containing ozone at a temperature of from about 100° to about 180° C in an extruder.

3. The composition of Claim 1, characterized in that said low molecular weight polymer is low molecular weight butyl rubber and is produced by reacting a high molecular weight butyl rubber with a stream of air in an extruder, wherein said extruder is operated at a temperature of from about 150° to about 250° C and said high molecular weight butyl rubber contains essentially no antioxidant compound.

4. The composition of Claim 1, characterized in that said low molecular weight polymer is low molecular weight butyl rubber and is produced by copolymerization of isobutylene and isoprene in a methyl chloride solution at a temperature of from about -95° C to about -50° C in the presence of a catalyst system comprising a Lewis acid, said copolymerization being continued until a suitable conversion level is reached which results in a polymer having Mn in the range of from about 15,000 to about 30,000.

5. The composition of Claim 1, characterized in that said high molecular weight rubbery polymer is butyl rubber and said curing system comprises from about 1 to about 10 parts by weight of zinc oxide, from about 0.2 to about 2 parts by weight of elemental sulphur and from about 0.5 to about 3 parts by weight of at least one sulphur based accelerator.

6. A pneumatic tire having an inner liner containing the vulcanizate of the composition of Claim 5.

7. The composition of Claim 1 characterized in that said high molecular weight rubbery polymer is selected from chlorinated butyl rubber and brominated butyl rubber and said curing system comprises from about 1 to about 10 parts by weight of zinc oxide and from about 0.5 to about 3 parts by weight of at least one sulphur based accelerator.

8. The composition of Claim 7 characterized in that said low molecular weight polymer is selected from low molecular weight chlorinated butyl rubber and low molecular weight brominated butyl rubber.

9. The composition of Claim 8 characterized in that said high molecular weight polymer is brominated butyl rubber and said curing system further comprises from about 0.2 to about 2 parts by weight of elemental sulphur.

10. A pneumatic tire having an inner liner containing the vulcanizate of the composition of Claim 9.